Europäisches Patentamt

(19) European Patent Office

Office européen des brevets

(11) Numéro de publication: **0 227 493**
**B1**

(12) **FASCICULE DE BREVET EUROPEEN**

(45) Date de publication du fascicule du brevet:
27.12.90

(51) Int. Cl.⁵: **G21C 13/06**, G21C 1/02

(21) Numéro de dépôt: 86402131.6

(22) Date de dépôt: 30.09.86

(54) Réacteur nucléaire à neutrons rapides comportant un bouchon couvercle-coeur perfectionné.

(30) Priorité: 03.10.85 FR 8514673

(43) Date de publication de la demande:
01.07.87 Bulletin 87/27

(45) Mention de la délivrance du brevet:
27.12.90 Bulletin 90/52

(84) Etats contractants désignés:
BE DE GB IT

(56) Documents cités:
EP-A- 0 108 691
EP-A- 0 127 539
FR-A- 2 289 031
FR-A- 2 486 295

NUCLEAR TECHNOLOGY,
vol. 68, no. 2, février 1985, pages 135-145, La Grange
Park, Ill., US; J. BRANCHU et al.:
"Superphénix 1 reactor block fabrication"

(73) Titulaire: COMMISSARIAT A L'ENERGIE ATOMIQUE
Etablissement de Caractère Scientifique Technique et
Industriel, 31/33, rue de la Fédération, F-75015 Paris(FR)

(72) Inventeur: Lemercier, Guy, 67, Avenue de la Bourgade,
F-13610 Le Puy Sainte Reparade(FR)

(74) Mandataire: Mongrédien, André et al, c/o
BREVATOME 25, rue de Ponthieu, F-75008 Paris(FR)

ACTORUM AG

## Description

La présente invention concerne un réacteur nucléaire à neutrons rapides refroidi par un métal liquide et comprenant une cuve fermée par une dalle horizontale à laquelle est suspendu un bouchon couvercle-coeur. Dans un tel réacteur, l'invention se rapporte plus précisément au bouchon couvercle-coeur.

Dans les réacteurs nucléaires à neutrons rapides, le coeur du réacteur est placé dans une cuve principale remplie de métal liquide généralement constitué par du sodium. Ce métal liquide sert à transférer jusqu'à des échangeurs de chaleur la chaleur créée par la réaction de fission qui se produit dans le coeur du réacteur. La circulation du sodium entre le coeur et les échangeurs est assurée par des pompes.

Dans les réacteurs de type intégré, les échangeurs de chaleur et les pompes sont également placés à l'intérieur de la cuve principale du réacteur. Une cuve interne délimite alors dans la cuve principale un collecteur chaud contenant le sodium sortant du coeur du réacteur et un collecteur froid contenant le sodium sortant des échangeurs de chaleur.

Dans les réacteurs nucléaires à neutrons rapides, l'expression "bouchon couvercle-coeur" est utilisée pour désigner un ensemble de pièces suspendu à la dalle obturant la cuve principale, au-dessus du coeur du réacteur. Cet ensemble comprend un bouchon obturant une ouverture centrale formée dans la dalle, un sous-ensemble appelé "couvercle-coeur" et situé immédiatement au-dessus du coeur, ainsi que les pièces par lesquelles le "couvercle-coeur" est suspendu au bouchon.

Le couvercle-coeur a pour double fonction de permettre de surveiller et de contrôler le coeur du réacteur, ainsi que de dévier le jet de sodium chaud sortant du coeur vers les échangeurs de chaleur.

Afin d'effectuer la surveillance du coeur, le couvercle-coeur comprend généralement des tubes de prélèvement de sodium liquide servant à détecter et à localiser d'éventuelles ruptures de gaines dans le coeur du réacteur, et des tubes de plus petit diamètre dans lesquels sont logés des thermocouples.

Pour permettre le contrôle de la réaction de fission dans le coeur du réacteur, le bouchon couvercle-coeur comporte des fourreaux ou tubes guides de grand diamètre, d'axes verticaux. Ces fourreaux permettent le passage de barres de contrôle réalisées en matériaux absorbant les neutrons et de tiges verticales de commande auxquelles les barres sont normalement suspendues.

Enfin, la déviation du jet de sodium sortant du coeur du réacteur vers les échangeurs de chaleur est obtenue au moyen d'un ou plusieurs déflecteurs placés à proximité immédiate du coeur.

Dans un réacteur nucléaire à neutrons rapides, le bouchon couvercle-coeur constitue donc un composant important quant au comportement thermohydraulique du sodium dans le collecteur chaud.

Ainsi, les calculs montrent que le compartiment inférieur du bouchon couvercle-coeur doit présenter une grande porosité, afin que le jet de sodium chaud sortant du coeur soit défléchi et canalisé radialement vers les échangeurs de chaleur au travers de ce compartiment. En effet, une porosité insuffisante conduit au passage d'une partie importante du sodium sous le bouchon couvercle-coeur. Il en résulte une perturbation de l'écoulement, notamment au niveau de la surface libre du sodium, qui doit rester aussi calme que possible.

Parallèlement, le comportement thermohydraulique du sodium à l'intérieur du collecteur chaud doit limiter autant que possible les chargements thermiques auxquels sont soumises les structures telles que la cuve interne ou le bouchon couvercle-coeur. En effet, ces chargements thermiques doivent être assez faibles pour garantir la tenue mécanique de ces structures dans le temps.

Ces conditions thermohydrauliques qui doivent être remplies dans le collecteur chaud sont d'autant plus délicates à obtenir que la compacité de ce collecteur ou le débit du sodium liquide dans le coeur augmente. Ces conditions sont également plus difficiles à respecter lorsqu'une zone de stockage d'assemblages combustibles est prévue dans le collecteur chaud, lorsqu'on utilise une cuve interne à redan simple ou lorsque la charge hydrostatique entre le plan supérieur du coeur et le niveau libre du sodium est faible.

Le brevet français n° 2 289 031 décrit un réacteur nucléaire à neutrons rapides comportant un bouchon couvercle-coeur formé principalement d'une virole extérieure ajourée dans sa partie basse et d'un certain nombre de plaques horizontales, également perforées, disposées immédiatement au-dessus du coeur.

Si une telle structure peut être utilisée lorsque les conditions thermohydrauliques définies précédemment ne sont pas trop difficiles, son utilisation devient pratiquement exclue lorsque ces conditions sont plus strictes, par exemple sous l'influence d'un ou plusieurs des facteurs évoqués précédemment. En effet, les perforations formées dans les plaques inférieures du bouchon couvercle-coeur définissent une limite de porosité qui ne peut être dépassée sous peine de ne pas assurer la tenue mécanique de la structure.

Des observations comparables peuvent être faites à propos du bouchon couvercle-coeur décrit dans la demande de brevet français n° 83 08734, dans lequel des plaques déflectrices de formes coniques ou tronconiques sont suspendues aux fourreaux, immédiatement au-dessus du cœur. En effet, si la structure de ce bouchon couvercle-cœur est plus légère que la structure du bouchon couvercle-cœur décrit dans le précédent document, ce qui permet de réduire son inertie thermique, cela est réalisé au détriment de la porosité de la partie inférieure du bouchon couvercle-cœur. De ce fait des perturbations risquent de se produire à la surface libre du sodium dans le collecteur chaud.

Enfin, le document EP-A-108 691 décrit un réacteur dans lequel une grille horizontale et plusieurs parties juxtaposées fixées sur les fourneaux des barres de contrôle et placée au-dessous de la plaque couvercle-cœur. Cette grille présente les mêmes inconvénients que dans les autres documents cités.

La présente invention a précisément pour objet un réacteur nucléaire à neutrons rapides comprenant un bouchon couvercle-cœur satisfaisant aux conditions thermohydrauliques les plus sévères dans le collecteur chaud, tout en présentant une structure relativement simple, la tenue mécanique de cette structure dans la partie inférieure du bouchon couvercle-cœur étant assurée par autoportance.

A cet effet et conformément à l'invention, il est proposé un réacteur nucléaire à neutrons rapides refroidi par un métal liquide et comprenant une cuve fermée par une dalle horizontale à laquelle est suspendu un bouchon couvercle-cœur, ledit bouchon comprenant une virole extérieure, d'axe verticale, entourant des fourreaux de guidage de barres de contrôles et des tubes de prélèvement de métal liquide, d'axes également verticaux, ladite virole supportant une plaque couvercle-cœur traversée par les fourreaux et les tubes, le bouchon couvercle-cœur comprenant en outre au moins une grille située en-dessous de la plaque couvecle-cœur et comportant des plaques modulaires horizontales, chacune desdites plaques modulaires étant fixée sur l'un au moins des fourreaux et/ou des tubes, caractérisé en ce que la grille comprend de plus une plaque périphérique annulaire et horizontale reliée fixement à la plaque couvercle-cœur, les plaques modulaires d'une même grille étant décalées verticalement de telle sorte que lesdites plaques modulaires et la plaque périphérique délimitent entre elles des passages pour le métal liquide, la plaque couvercle-cœur étant horizontale.

Par plaques modulaires, il faut entendre des plaques métalliques dont les dimensions principales, et les entre-axes, sont des multiples, ou des sous-multiples du pas d'implantation des assemblages dans le cœur. En fixant chacune de ces plaques modulaires à au moins un fourreau, on peut réaliser un "pavage" plus ou moins serré de l'intérieur de la virole, de façon à protéger efficacement la plaque couvercle-cœur de l'impact direct des jets de sodium chaud sortant du cœur et à canaliser correctement l'écoulement de ce sodium vers le collecteur chaud, sans que se posent des problèmes de tenue mécanique de cette structure.

Selon un premier mode de réalisation de l'invention, les plaques modulaires sont décalées verticalement vers le haut en s'éloignant de l'axe de la virole extérieure.

Selon un deuxième mode de réalisation de l'invention, les plaques modulaires sont décalées verticalement vers le bas en s'éloignant de l'axe de la virole extérieure.

Dans ces deux modes de réalisation de l'invention, les bords des plaques modulaires voisines peuvent être alignés verticalement, former entre elles des jeux selon une direction horizontale, ou au contraire se recouvrir en partie selon une direction horizontale.

Dans une première variante de réalisation de l'invention, la virole extérieure est fixée à la plaque périphérique et comporte des perforations en-dessous de la plaque couvercle-cœur.

Selon une autre variante de réalisation de l'invention, l'extrémité inférieure de la virole extérieure est fixée à la plaque couvercle-coeur et la plaque périphérique est suspendue à la plaque couvercle-coeur par des tirants.

Dans ce dernier cas, les diamètres extérieurs de la plaque couvercle-coeur et de la plaque périphérique peuvent être légèrement supérieurs aux diamètres extérieurs de la virole extérieure, un décrochement étant alors prévu à la périphérie de la plaque périphérique, pour le passage de moyens de manutention des assemblages constituant le coeur du réacteur.

Selon un autre aspect de l'invention, le bouchon couvercle-coeur comprend une grille déflectrice située à proximité des extrémités inférieures des fourreaux et des tubes et une grille formant bouclier thermique située entre la grille déflectrice et la plaque couvercle-coeur.

On décrira maintenant, à titre d'exemples non limitatifs, différents modes de réalisation de l'invention en se référant aux dessins annexés, dans lesquels :

- la figure 1 est une vue en coupe verticale schématique d'un réacteur nucléaire à neutrons rapides réalisé conformément à l'invention,
- la figure 2 est une vue en coupe verticale représentant à plus grande échelle l'extrémité inférieure du bouchon couvercle-coeur, les moitiés gauche et droite de la figure illustrant deux modes de réalisation de l'invention,
- la figure 3 est une vue de dessus selon le plan III-III de la figure 2,
- la figure 4 est une vue comparable à la figure 2, les moitiés gauche et droite de cette figure illustrant deux autres modes de réalisation de l'invention,
- la figure 5 est une vue de dessus selon le plan V-V de la figure 4.

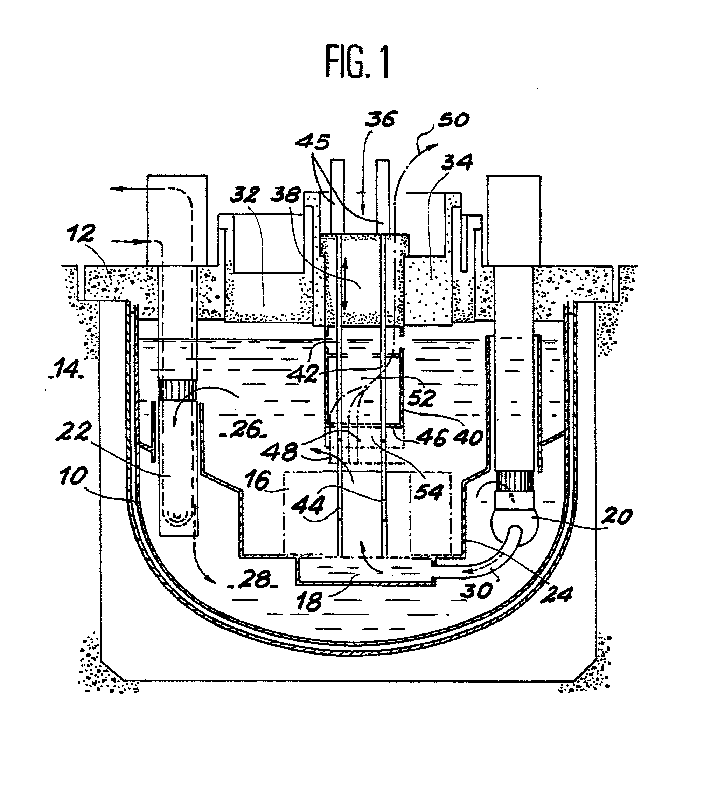

Le réacteur nucléaire à neutrons rapides représenté sur la figure 1 comprend de façon connue une cuve principale 10, d'axe vertical, obturée à son extrémité supérieure par une dalle de fermeture horizontale 12. La cuve 10 est elle-même logée à l'intérieur d'un bâtiment de béton 14 sur lequel la dalle 12 prend appui par sa périphérie.

La cuve 10 est remplie de sodium liquide surmonté d'une atmosphère de gaz neutre à proximité de la dalle 12. Le coeur 16 du réacteur est situé dans la partie centrale de la cuve 10, sur un sommier 18 d'alimentation et de supportage. Des pompes 20 et des échangeurs de chaleur 22 suspendus à la dalle 12 sont disposés dans la cuve 10 autour du coeur 16.

Une cuve interne 24 délimite à l'intérieur de la cuve principale 10 un collecteur chaud 26 et un collecteur froid 28. Le collecteur chaud 26, situé principalement au-dessus de la cuve interne 24 et du coeur 16 contient le sodium chaud sortant du coeur et pénétrant dans les échangeurs de chaleur 22. Le collecteur froid 28, situé au-dessous de la cuve interne 24 et du sommier 18, contient le sodium relativement froid sortant des échangeurs de chaleur 22 et aspiré par les pompes 20. Ces dernières refoulent ensuite le sodium dans le sommier 18 par des conduites 30.

Dans sa partie centrale, la dalle 12 comporte un grand bouchon tournant 32 et un petit bouchon tournant 34, dont l'axe est excentré par rapport à celui du grand bouchon tournant 32. De façon bien connue, des moyens de manutention tels que des bras ou des ringards sont suspendus au petit bouchon tournant 34. Ces moyens de manutention ne sont pas représentés sur la figure 1, dans un but de clarification. Ils assurent le chargement et le déchargement des assemblages constituant le coeur 16 du réacteur, avec l'aide des rotations combinées des bouchons tournants 32 et 34.

Le bouchon couvercle-coeur 36 auquel se rapporte plus précisément la présente invention est suspendu au petit bouchon tournant 34, de façon à se trouver verticalement au-dessus du coeur 16 du réacteur. Il comprend de façon connue un bouchon 38 logé dans une ouverture formée dans le petit bouchon tournant 34.

Une virole extérieure cylindrique 40, d'axe vertical est suspendue au bouchon 38. A l'intérieur de cette virole 40 sont disposés des fourreaux ou tubes cylindriques 42, d'axes également verticaux. Ces fourreaux 42 servent au passage des barres de contrôle 44 en matériau absorbant les neutrons et des tiges verticales (non représentées) auxquelles ces barres sont normalement suspendues. De façon bien connue, l'introduction plus ou moins grande des barres de contrôle 44 dans le coeur 16 du réacteur, commandée par des mécanismes 45 montés sur le bouchon 38, permet de contrôler la réaction de fission dans le coeur et, par conséquent, de piloter le réacteur.

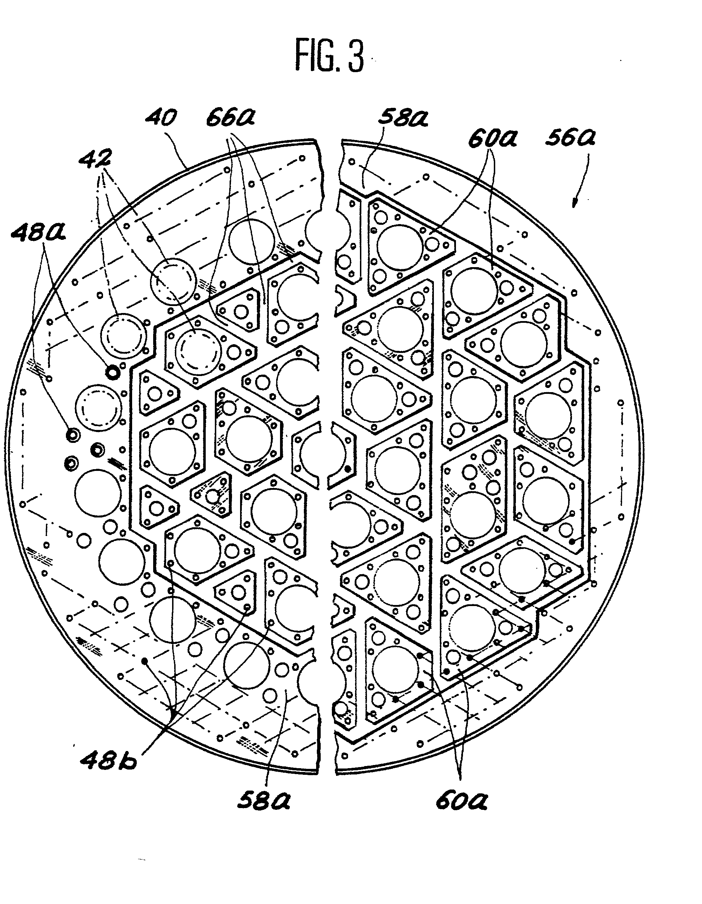

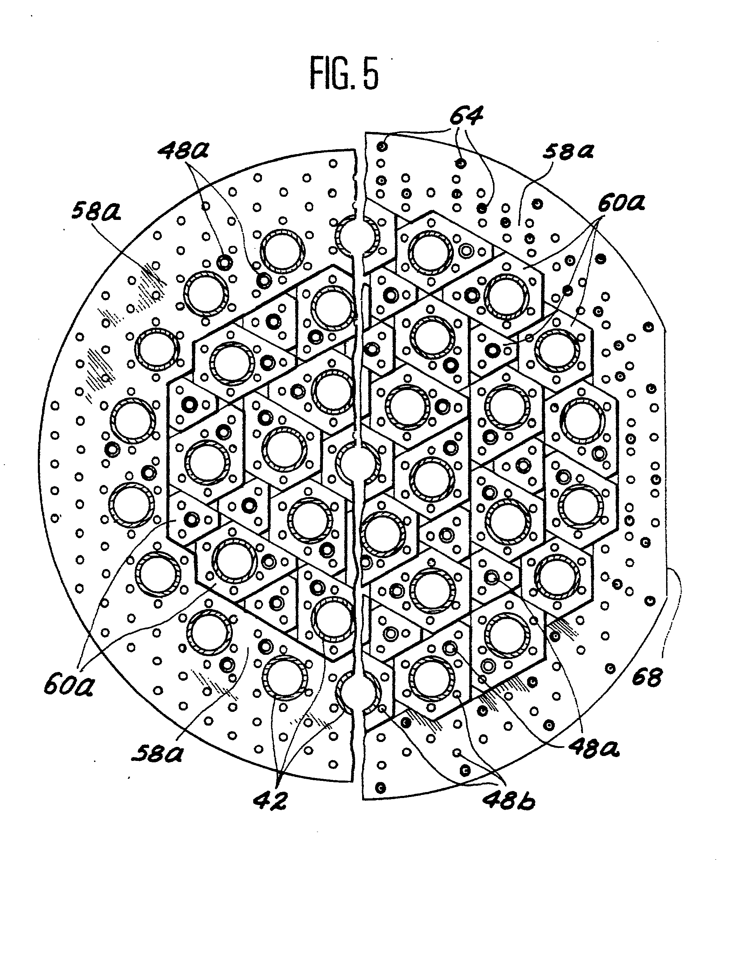

Une plaque couvercle-coeur horizontale 46 est soudée à sa périphérie sur la virole extérieure 40 et traversée de façon relativement étanche par les fourreaux 42. Cette plaque est également traversée par des tubes 48, d'axes verticaux. Comme l'illustrent les figures 3 et 5, certains de ces tubes 48 (48a) permettent d'effectuer des prélèvements de sodium à la sortie du coeur, et les autres tubes (48b), de plus petit diamètre, sont destinés à recevoir des thermocouples permettant de mesurer la température en différents points à la sortie du coeur. Ces tubes 48 sont reliés à une instrumentation externe (non représentée) par des tubes 50 (figure 1).

La plaque couvercle-coeur 46 délimite à l'intérieur du bouchon couvercle-coeur 36 une zone supérieure 52 et une zone inférieure 54.

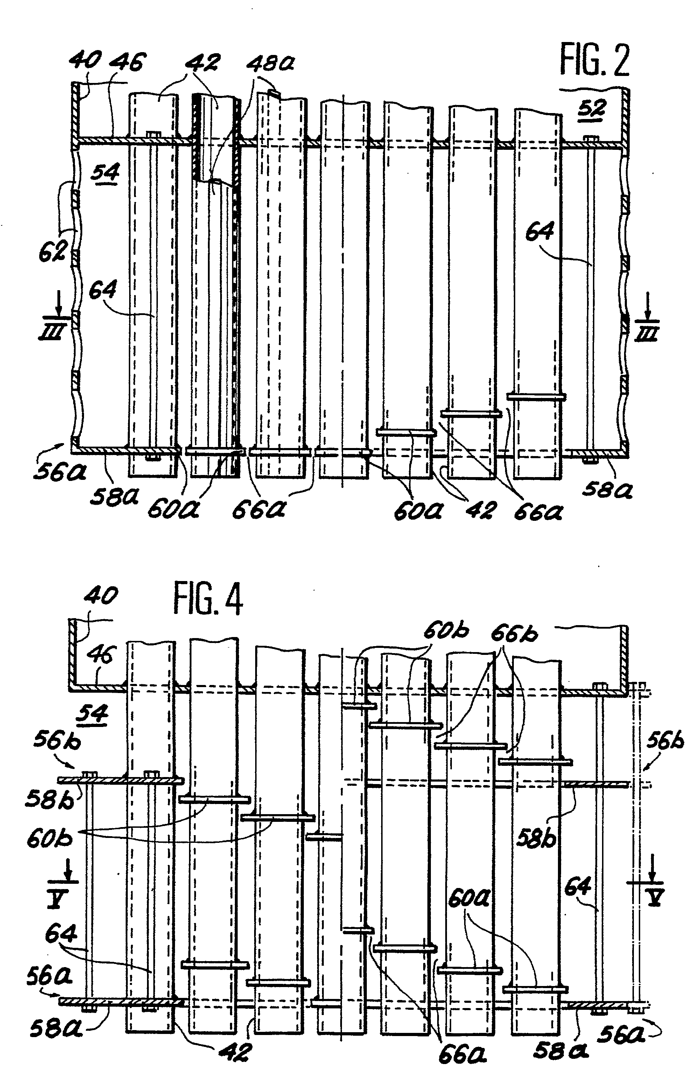

La présente invention porte précisément sur la réalisation particulière de cette zone inférieure 54. Pour cette raison, différents modes de réalisation de cette zone sont représentés à plus grande échelle sur les moitiés gauches et droites des figures 2 et 3 et sur les moitiés gauches et droites des figures 4 et 5.

Sur les figures 2 et 3, on a représenté le cas où les fourreaux 42 et les tubes de prélèvement de sodium 48a supportent une grille unique 56a à proximité de leur extrémité inférieure. Cette grille 56 constitue une grille déflectrice pour le sodium sortant du coeur du réacteur. Elle comprend une plaque périphérique 58a annulaire et horizontale et, dans sa partie centrale, des plaques horizontales modulaires 60a.

Dans le mode de réalisation représenté sur la figure 2, la virole extérieure 40 se prolonge vers le bas au-delà de la plaque couvercle-coeur 46, et son extrémité inférieure est soudée sur le bord périphérique extérieur de la plaque annulaire 58a. La partie de la virole 40 située en-dessous de la plaque couvercle-coeur 46 est alors pourvue de perforations 62 régulièrement réparties sur toute sa hauteur et sa périphérie. Le supportage de la plaque annulaire 58a est complété par des tirants 64 régulièrement répartis autour de l'axe vertical de la virole 40 et reliant de façon rigide les plaques 46 et 58a.

Comme l'illustre en vue de dessus la figure 3, les fourreaux 42 sont répartis sous la forme de trois couronnes concentriques autour d'un fourreau central dont l'axe est confondu avec l'axe vertical de la virole 40.

Dans le mode de réalisation représenté à titre d'exemple sur les moitiés gauches des figures 2 et 3, on voit que les fourreaux 42 de la couronne extérieure traversent la plaque périphérique 58a.

Au contraire, dans le mode de réalisation représenté sur les moitiés droites des figures 2 et 3, aucun des fourreaux 42 ne traverse la plaque périphérique 58a.

Chacune des plaques modulaires 60a est fixée sur l'un des fourreaux 42 et/ou sur l'un au moins des tubes 48a servant au prélèvement du sodium. Ces plaques modulaires 60a constituent la partie centrale de la grille 56a et sont traversées par tous les fourreaux 42 et les tubes 48a et 48b qui ne traversent pas la plaque périphérique 58a. Ces plaques modulaires 60a ainsi que la plaque annulaire 58a délimitent entre elles des passages 66a permettant au sodium sortant du coeur du réacteur de s'écouler vers le haut, tout en infléchissant son écoulement radialement vers les échangeurs de chaleur.

Comme l'illustrent les moitiés gauches des figures 2 et 3, ces passages 66a peuvent être obtenus en plaçant les plaques 58a et 60a au même niveau et en prévoyant un jeu entre les bords voisins de ces plaques.

Comme l'illustre la moitié droite de la figure 2, la section des passages 66a formés par la grille 56a peut être accrue en décalant vers le haut le niveau des plaques 60a au fur et à mesure qu'on s'éloigne de l'axe vertical de la virole 40. Dans ce cas, la plaque périphérique 58a se trouve de préférence au même niveau que la plaque 60a fixée au fourreau central 42.

Comme l'illustre la moitié droite de la figure 4, la section des passages 66a formés par la grille 56a peut aussi être accrue en décalant au contraire vers le bas le niveau des plaques 60a et 58a, en s'éloignant de l'axe vertical de la virole 40.

Bien entendu, dans ces deux derniers cas, le décalage en hauteur entre les plaques 58a et 60a de la grille 56a peut être suffisant pour conférer aux passages 66a délimités entre les plaques la section souhaitée. Ainsi, comme l'illustrent les figures 4 et 5, les jeux entre les bords voisins des plaques 58a et 60a peuvent être supprimés, ces bords pouvant alors être alignés verticalement.

Si le décalage en hauteur entre les plaques 58a et 60a formant la grille 56a est suffisant, les bords voisins des plaques 58a et 60a peuvent même se recouvrir. Cette disposition permet d'augmenter axialement la chicane rencontrée par les jets de sodium sortant du coeur du réacteur, ce qui facilite leur évacuation rapide vers la périphérie du compartiment inférieur 54 du bouchon couvercle-coeur et évite l'impact direct des jets de sodium chaud sur la plaque couvercle-coeur 46.

Sur la figure 4, on a représenté le cas où une deuxième grille 56b est interposée entre la grille déflectrice 56a et la plaque couvercle-coeur 46. Cette grille 56b assure une fonction de bouclier thermique. Lors des périodes transitoires du fonctionnement du réacteur, elle protège la plaque couvercle-coeur 46 des jets de sodium chaud ou froid sortant du coeur.

Cette grille 56b est réalisée pour l'essentiel de manière comparable à la grille déflectrice 56a. En particulier, elle se compose d'une plaque périphérique 58b annulaire et horizontale et de plaques modulaires 60b constituant la partie centrale de la grille.

Comme celles (60a) de la grille 56a, chacune des plaques modulaires 60b est fixée sur un fourreau 42 et/ou sur au moins un tube de prélèvement de sodium 48a.

Sur la moitié gauche des figures 4 et 5, on a représenté le cas où les deux plaques périphériques 58a et 58b sont traversées par les fourreaux 42 de la couronne extérieure.

Au contraire, sur la moitié droite des figures 4 et 5, on a représenté le cas où aucun des fourreaux 42 ne traverse les plaques périphériques 58a et 58b.

Sur la figure 4, on a représenté un mode de réalisation dans lequel la virole extérieure 40 s'arrête au niveau de la plaque couvercle-coeur 46, l'extrémité inférieure de la virole 40 étant soudée sur le bord périphérique de la plaque 46.

Dans le cas où les plaques 58a et 58b sont traversées par les fourreaux 42 de la couronne périphérique (moitiés gauches des figures 4 et 5) ces fourreaux assurent en partie le supportage des plaques 58a et 58b.

De préférence, ce supportage est complété par des tirants tels que 64. Ces tirants peuvent être placés soit uniquement entre les plaques 58a et 58b comme l'illustre la moitié gauche de la figure 4, soit entre la plaque couvercle-coeur 46 et la plaque 58a de la grille déflectrice 56a. Deux séries de tirants disposés en quinconce peuvent aussi être placées respectivement entre les plaques 58a et 58b et entre les plaques 46 et 58b.

Dans le cas illustré sur la moitié droite de la figure 4, où aucun des fourreaux 42 ne traverse les plaques 58a et 58b, celles-ci doivent être impérativement reliées à la plaque couvercle-coeur 46 par des tirants 64. Ces tirants peuvent ici encore être soit des tirants reliant la plaque 46 à la plaque 58a, comme on l'a représenté, soit deux séries de tirants disposées en quinconce d'une part entre les plaques 58a et 58b, d'autre part entre les plaques 58b et 46.

De même que les plaques 60a de la grille 56a, les plaques 60b de la grille 56b sont disposées de façon à former entre leurs bords voisins des passages à chicanes 66b pour le sodium sortant du coeur du réacteur. Ces passages peuvent être obtenus de la même manière que pour la grille 56a, soit en plaçant toutes les plaques au même niveau et en prévoyant des jeux entre leurs bords voisins, soit en décalant le niveau des plaques les unes par rapport aux autres, comme on l'a représenté sur la figure 4. Dans ce dernier cas, le niveau des plaques 60b et 58b peut augmenter en s'éloignant de l'axe vertical de la virole 40, ou diminuer en s'éloignant de ce même axe. Ces deux situations sont représentées respectivement sur les moitiés gauche et droite de la figure 4.

Lorsqu'un tel décalage en hauteur existe entre les plaques 60b et 58b, trois variantes de réalisation sont possibles, de même que pour la grille 56a. Ainsi, un jeu selon une direction horizontale peut être prévu entre les bords voisins des plaques. Ce jeu peut aussi être supprimé, les bords voisins des plaques étant alors alignés verticalement. Enfin, les bords voisins des plaques peuvent aussi se recouvrir. Seule cette dernière situation a été représentée sur la figure 4.

Dans le cas représenté sur la figure 4 où le bouchon couvercle-coeur comprend deux grilles 56a et 56b, celles-ci peuvent être réalisées soit exactement de la même manière, soit différemment.

Ainsi, les plaques constituant la grille 56a peuvent être placées toutes au même niveau, alors que les plaques constituant la grille 56b sont décalées verticalement, ou inversement.

De même, les plaques modulaires 60a de la grille 56a peuvent être décalées verticalement vers le haut alors que celles (60b) de la grille 56b sont décalées verticalement vers le bas à partir de l'axe de la virole 40, ou inversement.

Enfin, même dans le cas où les deux grilles 56a et 56b sont constituées de plaques modulaires disposées dans un même plan ou décalées dans le même sens comme l'illustrent les moitiés gauche et droite de la figure 4, les passages 66a et 66b formés entre les plaques peuvent être différents. Cette différence peut résulter soit d'un décalage vertical différent entre les plaques, soit d'un encombrement horizontal des plaques différent, selon qu'elles appartiennent à la grille 56a ou à la grille 56b. Les moitiés gauche et droite de la figure 4 illustrent un exemple de cette situation. Dans cet exemple, les bords voisins des plaques 58a et 60a constituant la grille 56a sont alignés verticalement, alors que les bords voisins des plaques 58b et 60b constituant la grille 56b se recouvrent.

Les formes des plaques modulaires 60a et 60b constituant chacune des grilles du bouchon couvercle-coeur sont déterminées en fonction du réseau formé par les fourreaux 42 et par les tubes 48a et 48b, en tenant compte du fait que chacun des fourreaux supporte au maximum une plaque et que tous les tubes et les fourreaux traversent l'une des plaques de chacune des grilles 56a et 56b. Les deux ensembles formés par les plaques annulaires 58a et 58b et par les plaques modulaires 60a et 60b constituent ainsi deux grilles 56a et 56b définissant entre les plaques adjacentes des passages 66a et 66b de section déterminée.

Comme l'illustrent en particulier la moitié gauche de la figure 3 et la figure 5, lorsque les tubes et les fourreaux sont répartis selon un réseau hexagonal, ces différentes exigences peuvent conduire à donner aux plaques modulaires les formes suivantes :
- triangle équilatéral tronqué aux angles pour les plaques les plus petites traversées seulement par un tube de prélèvement de sodium et par trois tubes servant à loger des thermocouples,
- hexagone pour les plaques traversées par un fourreau et par six tubes servant à loger des thermocouples,
- hexagone plus triangle accolé pour les plaques traversées par un fourreau, un tube de prélèvement de sodium et sept tubes servant à loger les thermocouples.

Dans une variante représentée sur la moitié droite de la figure 3, permettant à toutes les plaques modulaires d'être supportées par un fourreau, les formes des plaques sont légèrement différentes :
- hexagone traversé par le fourreau central et par six tubes servant à loger des thermocouples,
- trapèze isocèle traversé par un fourreau, deux tubes de prélèvement de sodium et huit tubes servant à loger des thermocouples,
- parallélogramme traversé par un fourreau, quatre tubes de prélèvement de sodium et onze tubes servant à loger des thermocouples,
- triangle équilatéral traversé par un fourreau, trois tubes de prélèvement de sodium et neuf tubes servant à loger des thermocouples.

Sur la moitié droite des figures 4 et 5, on a également représenté une variante de réalisation de l'invention dans laquelle le diamètre périphérique extérieur des plaques annulaires 58a et 58b et de la plaque couvercle-coeur 46 sont légèrement supérieurs au diamètre extérieur de la virole 40. Cette configuration permet à la grille déflectrice 56a de déborder légèrement à la périphérie de la zone centrale fissile du coeur du réacteur, assurant ainsi la couverture et la déflexion du jet de sodium sortant de la dernière couronne d'assemblages combustibles du coeur du réacteur. Cette variante est intéressante, car le débit du sodium traversant ces assemblages périphériques est important et pourrait perturber l'écoulement du sodium dans le collecteur chaud s'il n'était pas totalement couvert par le bouchon couvercle-coeur.

Dans ce cas et comme l'illustre en particulier la moitié droite de la figure 5, un décrochement constitué par exemple par un méplat 68 est formé à la périphérie de la couronne 58a. Ce méplat 68 permet au bras de manutention suspendu au petit bouchon tournant et non représenté sur les figures d'effectuer une rotation complète. Ce méplat permet également d'escamoter le bras de manutention lors du fonctionnement du réacteur dans une position parallèle aux lignes de courant de sodium dans le collecteur chaud. On évite ainsi la création de turbulence dans le collecteur chaud.

Les différents modes de réalisation, qui viennent d'être décrits à titre d'exemples non limitatifs, font apparaître que l'utilisation d'une ou deux grilles déflectrices constituées dans leurs parties centrales de plaques modulaires supportées par les fourreaux et par les tubes, autorise une grande variété de configurations. Ainsi, la porosité de la zone inférieure 54 du bouchon couvercle-coeur et la déflexion des jets de sodium sortant du coeur peuvent être déterminés avec une grande précision pour satisfaire les conditions thermohydrauliques particulières imposées dans le collecteur chaud. Les plaques constituant les grilles étant autoportantes, la tenue mécanique est assurée même lorsque la porosité de la zone 54 atteint des valeurs importantes.

**Revendications**

1. Réacteur nucléaire à neutrons rapides refroidi par un métal liquide et comprenant une cuve (10) fermée par une dalle horizontale (12) à laquelle est suspendu un bouchon couvercle-cœur (36), ledit bouchon comprenant une virole extérieure (40), d'axe vertical, entourant des fourreaux (42) de guidage de barres de contrôle (44) et des tubes (48a) de prélèvement de métal liquide, d'axes également verticaux, ladite virole supportant une plaque couvercle-cœur (46) traversée par les fourreaux (42) et les tubes (48a), le bouchon couvercle-cœur (36) comprenant en outre, au moins une grille (56a, 56b) située en-dessous de la plaque couvercle-cœur (46) et comportant des plaques modulaires horizontales (60a, 60b), chacune desdites plaques modulaires étant fixée sur l'un au moins des fourreaux (42) et/ou des tubes (48a), caractérisé en ce que la grille (56a, 56b) comprend de plus une plaque périphérique (58a, 58b) annulaire et horizontale reliée fixement à la plaque couvercle-cœur, les plaques modulaires (60a, 60b) d'une même grille étant décalées verticalement, de telle sorte que lesdites plaques modulaires (60a, 60b) et la plaque périphérique (58a, 58b) délimitent entre elles des passages (66a, 66b) pour le métal liquide, la plaque couvercle-cœur étant horizontale.

2. Réacteur selon la revendication 1, caractérisé en ce que les plaques modulaires (60a, 60b) d'une même grille (56a, 56b) sont décalées verticalement vers le haut en s'éloignant de l'axe de la virole extérieure (40).

3. Réacteur selon la revendication 1, caractérisé en ce que les plaques modulaires (60a, 60b) d'une même grille (56a, 56b) sont décalées verticalement vers le bas en s'éloignant de l'axe de la virole extérieure (40).

4. Réacteur selon l'une quelconque des revendications 2 et 3, caractérisé en ce que les bords des plaques modulaires (60a, 60b) voisines de la plaque périphérique (58a, 58b) d'une même grille forment entre eux des jeux selon une direction horizontale.

5. Réacteur selon l'une quelconque des revendications 2 et 3, caractérisé en ce que les bords des plaques modulaires (60a, 60b) voisines et de la plaque périphérique (58a, 58b) d'une même grille sont alignés verticalement.

6. Réacteur selon l'une quelconque des revendications 1 à 6, caractérisé en ce que les bords des plaques modulaires (60a, 60b) voisines et de la plaque périphérique (58a, 58b) d'une même grille se recouvrent en partie selon une direction horizontale.

7. Réacteur selon l'une quelconque des revendications 1 à 6, caractérisé en ce que la virole extérieure (40) est fixée à ladite plaque périphérique (58a, 58b) et comporte des perforations (62) en-dessous de la plaque couvercle-cœur (46).

8. Réacteur selon l'une quelconque des revendications 1 à 6, caractérisé en ce que l'extrémité inférieure de la virole extérieure (40) est fixée à la plaque couvercle-cœur (46), la plaque périphérique (58a, 58b) étant suspendue à la plaque couvercle-cœur (46) par des tirants (64).

9. Réacteur selon la revendication 8, caractérisé en ce que les diamètres extérieurs de la plaque couvercle-cœur (46) et de la plaque périphérique (58a, 58b) sont légèrement supérieurs au diamètre extérieur de la virole extérieure (40), un décrochement (68) étant prévu à la périphérie de la plaque périphérique (58a, 58b) pour le passage de moyens de manutention.

10. Réacteur selon l'une quelconque des revendications 1 à 9, caractérisé en ce que le bouchon couvercle-cœur (36) comprend une grille déflectrice (56a) située à proximité des extrémités inférieures des fourreaux (42) et des tubes (48a) et une grille (56b) formant bouclier thermique, située entre la grille déflectrice et la plaque couvercle-cœur (46).

**Claims**

1. Liquid metal-cooled fast neutron nuclear reactor having a vessel (10) closed by a horizontal slab (12) on which is suspended a core cover plug (36), the latter having a vertically axed external ferrule (40) surrounding control rod guidance sleeves (42) and also vertically axed liquid metal sampling tubes (48a), said ferrule supporting a core cover plate (46) traversed by sleeves (42) and tubes (48a), the core cover plug (36) also comprising at least one grid (56a, 56b) located below the core cover plate (46) and having horizontal modular plates (60a, 60b), each of which is fixed to at least one of the sleeves (42), and/or tubes (48a), characterized in that the grid (56a, 56b) also comprises a horizontal, annular, peripheral plate (58a, 58b) connected in fixed manner to the cover – core plate, the modular plates (60a, 60b) of the same grid being vertically displaced in such a way that said modular plates and the peripheral plate (58a, 58b) defined between them passages (66a, 66b) for the liquid metal, the cover – core plate (46) being horizontal.

2. Reactor according to claim 1, characterized in that the modular plates (60a, 60b) of the same grid (56a, 56b) are vertically upwardly displaced on moving away from the axis of the outer ferrule (40).

3. Reactor according to claim 1, characterized in that the modular plates (60a, 60b) of the same grid (56a, 56b) are vertically downwardly displaced on moving away from the axis of the outer ferrule (40).

4. Reactor according to either of the claims 2 and 3, characterized in that the edges of the adjacent modular plates (60a, 60b) and the peripheral plate (58a, 58b) of the same grid form between them clearances in a horizontal direction.

5. Reactor according to either of the claims 2 and 3, characterized in that the edges of the adjacent modular plates (60a, 60b) and the peripheral plate (58a, 58b) of the same grid are vertically aligned.

6. Reactor according to either of the claims 2 and 3, characterized in that the edges of the adjacent modular plates (60a, 60b) and the peripheral plate (58a, 58b) of the same grid partly overlap in a horizontal direction.

7. Reactor according to any one of the claims 1 to 6, characterized in that the outer ferrule (40) is fixed to the peripheral plate (58a, 58b) and has perforations (62) below the core cover plate (46).

8. Reactor according to any one of the claims 1 to 6, characterized in that the lower end of the outer ferrule (40) is fixed to the core cover plate (46), the peripherall plate (58a, 58b) being suspended on the core cover plate (46) bye tie bolts (64).

9. Reactor according to claim 8, characterized in that the external diameters of the core cover plate (46) and the peripheral plate (58a, 58b) slightly exceeed the external diameter of the outer ferrule (40), a break (68) being provided on the periphery of the peripheral plate (58a, 58b) for the passage of handling means.

10. Reactor according to any one of the claims 1 to 9, characterized in that the core cover plug (36) comprises a deflecting grid (56a) located in the vicinity of the lower ends of the sleeves (42) and tubes (48a) and a grid (56b) forming a heat shield located between the deflecting grid and the core cover plate (46).

**Patentansprüche**

1. Schneller Neutronenkernreaktor, der durch ein flüssiges Metall gekühlt wird und eine Wanne (10) aufweist, die durch eine horizontale Platte (12) verschlossen wird, an der ein Spaltzonenverschlußdeckel (36) aufgehängt ist, wobei der Deckel einen äußeren Ring (40) mit einer vertikalen Achse aufweist, der Führungsscheiden (42) der Steuerstäbe (42) und Anzapfrohre (48a) für Flüssigmetall umgibt, wobei der Ring eine Spaltzonenverschlußplatte (46) trägt, die von den Scheiden (42) und den Rohren (48a) durchquert wird, wobei der Spaltzonenverschlußdeckel (36) außerdem wenigstens ein Gitter (56a, 56b) umfaßt, das sich über der Spaltzonenverschlußplatte (46) befindet und modulare, horizontale Platten (60a, 60b) aufweist, wobei jede der modularen Platten auf wenigstens eine der Scheiden (42) und/oder der Rohre (48a) montiert ist, dadurch gekennzeichnet, daß das Gitter zusätzlich eine periphere, ringförmige, und horizontale Platte (58a, 58b) umfaßt, die fest mit der Spaltzonenverschlußplatte verbunden ist, wobei die modularen Platten (60a, 60b) eines Gitters vertikal so voneinander entfernt sind, daß die modularen Platten (60a, 60b) und die periphere Platte (58a, 58b) zwischen sich Durchgänge (66a, 66b) für das flüssige Metall begrenzen, wobei die Spaltzonenverschlußplatte (46) horizontal ist.

2. Reaktor nach Anspruch 1, dadurch gekennzeichnet, daß die modularen Platten (60a, 60b) eines selben Gitters (56a, 56b) vertikal nach oben mit zunehmender Entfernung von der Achse des äußeren Rings (40) versetzt sind.

3. Reaktor nach Anspruch 1, dadurch gekennzeichnet, daß die modularen Platten (60a, 60b) eines selben Gitters (56a, 56b) vertikal nach unten mit zunehmender Entfernung von der Achse des äußeren Rings (40) versetzt sind.

4. Reaktor nach einem der Ansprüche 2 und 3, dadurch gekennzeichnet, daß die Ränder der modularen Platten (60a, 60b), die der peripheren Platte (58a, 58b) eines selben Gitters benachbart sind, zwischen sich ein Spiel in horizontaler Richtung bilden.

5. Reaktor nach einem der Ansprüche 2 und 3, dadurch gekennzeichnet, daß die Ränder der modularen Platten (60a, 60b), die der peripheren Platte (58a, 58b) eines selben Gitters benachbart sind, vertikal aneinandergereiht sind.

6. Reaktor nach einem der Ansprüche 2 und 3, dadurch gekennzeichnet, daß die Ränder der modularen Platten (60a, 60b), die der peripheren Platte (58a, 58b) eines selben Gitters benachbart sind, sich teilweise in einer horizontalen Richtung überdecken.

7. Reaktor nach einem der Ansprüche 1 bis 6, dadurch gekennzeichnet, daß der äußere Ring (40) an der peripheren Platte (58a, 58b) befestigt ist und Perforationen (62) unter der Spaltzonenverschlußplatte (46) aufweist.

8. Reaktor nach einem der Ansprüche 1 bis 6, dadurch gekennzeichnet, daß der äußere Ring (40) an der Spaltzonenverschlußplatte (46) befestigt ist, wobei die periphere Platte (58a, 58b) an der Spaltzonenverschlußplatte (46) durch Streben (64) aufgehängt ist.

9. Reaktor nach Anspruch 8, dadurch gekennzeichnet, daß die äußeren Durchmesser der Spaltzonenverschlußplatte (46) und der peripheren Platte (58a, 58b) leicht über dem äußeren Durchmesser des äußeren Rings (40) liegen, wobei ein Absatz (68) and der Peripherie der peripheren Platte (58a, 58b) für den Durchgang von Transportvorrichtungen vorgesehen ist.

10. Reaktor nach einem der Ansprüche 1 bis 9, dadurch gekennzeichnet, daß der Spaltzonenverschlußdeckel (36) ein Ablenkgitter (56a), das sich in der Nähe der unteren Enden der Scheiden (42) und der Rohre (48a) befindet, und ein einen thermischen Schild bildendes Gitter (56b) aufweist, das sich zwischen dem Ablenkgitter und der Spalzonenverschlußplatte (46) befindet.

# FIG. 1

FIG. 2

FIG. 4

FIG. 3

# FIG. 5